# EUROPÄISCHE PATENTSCHRIFT

(11) **EP 2 830 806 B1**
(45) Veröffentlichungstag und Bekanntmachung des Hinweises auf die Patenterteilung: **08.05.2019**
(21) Anmeldenummer: 13714248.5
(22) Anmeldetag: 25.03.2013
(51) Int. Cl.: B23K 9/04, B23K 35/28, B23K 10/02, B23P 15/10, B23K 26/34, C23C 4/00, C23C 4/04, F02B 23/06, F02F 3/14, F02F 3/26

(54) **VERFAHREN ZUR HERSTELLUNG EINES ALUMINIUMKOLBENS**
METHOD FOR PRODUCING AN ALUMINUM PISTON
PROCÉDÉ DE FABRICATION D'UN PISTON EN ALUMINIUM

(30) Priorität: 28.03.2012 DE 102012204947
(43) Veröffentlichungstag der Anmeldung: 04.02.2015
(73) Patentinhaber: Mahle International GmbH, 70376 Stuttgart (DE)
(72) Erfinder: BING, Karlheinz, 71686 Remseck (DE); HACKH, Thomas, 70619 Stuttgart (DE); SCHNAITER, Frank, 71254 Ditzingen (DE)
(74) Vertreter: BRP Renaud & Partner mbB Rechtsanwälte Patentanwälte Steuerberater
(86) Internationale Anmeldenummer: PCT/EP2013/056234
(87) Internationale Veröffentlichungsnummer: WO 2013/144072

(56) Entgegenhaltungen:
- EP-A1- 0 640 759
- WO-A1-2013/013830
- DE-A1- 2 200 003
- DE-A1- 3 246 630
- DE-A1- 3 339 867
- DE-A1- 19 733 205
- DE-B- 1 122 325
- JP-A- 05 001 622

## Beschreibung

Die vorliegende Erfindung betrifft ein Verfahren zur Herstellung eines Aluminiumkolbens für einen Verbrennungsmotor, der zumindest im Bereich eines Muldenrandes und/oder eines Muldengrundes einer Schweißbehandlung unterzogen wird gemäß dem Oberbegriff des Anspruchs 1. Die Erfindung betrifft außerdem einen nach einem derartigen Verfahren hergestellten Aluminiumkolben.

Das Umschmelzen im Muldenbereich bei Aluminiumkolben ist eine Möglichkeit, um die Beständigkeit des Aluminiumkolbens und somit auch seine Lebensdauer entscheidend erhöhen zu können. Derartigen Umschmelzverfahren sind jedoch Grenzen gesetzt, da sich insbesondere bei Kolben mit einer hohen thermischen Belastung gezeigt hat, dass sich im Brennstrahlbereich eine makroskopisch sichtbare Oberflächenschädigung ausbilden kann. Bei mikroskopischer Betrachtung zeigt sich, dass die Schädigung auf thermomechanische Ermüdung zurückzuführen ist, wobei die Rissbildung primär an der Phasengrenze Primärsilizium zu Aluminiummatrix auftritt. Der Grund der Schädigung wird auf zwei Ursachen zurückgeführt. Zum einen stellt die Phasengrenze Primärsilizium/Aluminiummatrix festigkeitsseitig eine Schwachstelle dar, welche durch die unterschiedlichen thermischen Ausdehnungskoeffizienten beider Phasen zusätzlich verschärft wird. Zum anderen führen die hohen Temperaturen zu einer Einformung und Degradation des Siliziumskeletts, was zu einer lokalen Verringerung der Festigkeit der Legierung führt und schließlich Temperaturwechselrisse begünstigt. Um eine möglichst hohe Widerstandsfähigkeit gegen thermomechanische Rissbildung zu erreichen, ist es daher anzustreben, diesen Effekt zu vermeiden, zumindest aber abzumildern.

Aus der EP 1 386 687 B1 ist ein gattungsgemäßes Verfahren zur Herstellung eines Aluminiumkolbens bekannt, bei dem die Schmelzbehandlung durch ein Lichtbogen-Schweißverfahren erfolgt und nach der Schmelzbehandlung eine Abkühlung mit einer Geschwindigkeit von 100-1000 K/s durchgeführt wird. Dabei wurde festgestellt, dass mit zunehmender Abkühlrate eine zunehmende Feinheit der kristallisierenden Partikel in der Schmelze einhergeht. Insgesamt soll mit dem bekannten Verfahren eine verbesserte Beständigkeit gegen thermische Ermüdung erzielt werden.

Aus der DE 10 2005 034 905 A1 ist ein weiteres Verfahren zur Herstellung eines Kolbens für einen Verbrennungsmotor bekannt, bei dem zumindest ein Bereich der Brennraummulde, umfassend mindestens einen Muldengrund, schmelzbehandelt wird, um einen Werkstoff im schmelzbehandelnden Bereich umzuschmelzen, wodurch ein Aufbau des Werkstoffs im schmelzbehandelnden Bereich in einer Schicht mit einer festlegbaren Tiefe beeinflusst werden kann.

Aus der DE 199 02 864 A1 sowie aus der DE 691 02 313 T2 sind weitere Verfahren zur Herstellung von Kolben bekannt.

Auch aus der DE 600 22 845 T2 ist ein Verfahren zur Verstärkung eines Aluminiumkolbens einer Brennkraftmaschine bekannt, wobei das Verfahren einen Schritt des Aufbringens einer Legierung mit Kupfer und Nickel durch Schmelzen an mindestens einem Abschnitt der Kante oder des Randes einer Brennraummulde umfasst.

Die DE 11 22 325 beschreibt einen Leichtmetallkolben für Brennkraftmaschinen, an dessen Mündungsrand eine wärmeleitende Leichtmetallbewehrung vorgesehen ist, welche mittels einer Schweißbehandlung aufgebracht ist.

Aus der DE 32 46 630 A1 ist ein Verfahren zur Herstellung verschleißfester Oberflächen von Kolben aus Aluminiumlegierungen für Brennkraftmaschinen bekannt. Hierzu wird in den Kolbenrohling im Bereich einer Ringnut eine Nut eingestochen und diese mit einer siliziumhaltigen Aluminiumlegierung gefüllt.

Verfahren zur Oberflächenbehandlung von Halbzeugen aus Aluminium sind auch bekannt aus US 5 352 538 B, DE 23 62 026 oder aus JP 05 001622A. Bekanntlich wird die Festigkeit von AISi-Kolbenlegierungen durch Zugabe von Kupfer, Nickel, Eisen, Magnesium und anderer Elemente unter Bildung von intermetallischen Phasen erhöht. Höhere Anteile dieser Legierungselemente führen dabei auch zu höheren Festigkeiten. Unter thermomechanischer Belastung bedeutet eine Erhöhung der Festigkeit eine Minimierung der zyklisch-plastischen Dehnung, was bedeutet, dass sich ein solcher Werkstoff unter thermomechanischer Belastung verstärkt elastisch und weniger plastisch verformt, was positiv für die Lebensdauer ist. Der Erhöhung der Legierungselemente sind dabei jedoch Grenzen gesetzt, da sich insbesondere mit der Zunahme der Legierungselemente Ni, Cu und Fe, große bzw. grobnadelige und oder auch spießige intermetallische Phasen bilden, die sich nachteilig auswirken, da sich ein sprödes Werkstoffverhalten einstellt und die Zähigkeit somit stark reduziert wird. Dadurch wird der vorgenannte Vorteil wieder aufgebraucht bzw. je nach Legierungszusammensetzung sogar verschlechtert. Für eine ausreichende Zähigkeit der Legierung ist es aber zwingend nötig, die intermetallischen Phasen in einer möglichst fein dispersen Art und Weise im Gefüge zu erzeugen. Ein hierzu bekannter Lösungsweg stellt die Erhöhung der Erstarrungsgeschwindigkeit dar, da durch eine höhere Erstarrungsgeschwindigkeit intermetallische Phasen weniger Zeit zu wachsen haben und sich dadurch feiner ausbilden. Bei den für die Kolbenherstellung eingesetzten Schwerkraft-Kokillengießverfahren sind jedoch auch der Steigerung der Erstarrungsgeschwindigkeiten Grenzen gesetzt, die üblicherweise so nieder anzusetzen sind, dass die technisch umsetzbaren Erstarrungsgeschwindigkeiten nicht ausreichen, ein ausreichend feines Gefüge mit höheren Anteilen an Kupfer, Nickel oder Eisen ohne sich grob ausbildende intermetallische Phasen entstehen zu lassen. Zur Vermeidung dieses Problems werden deshalb insbesondere bei Aluminiumkolben die angestrebten Legierungen durch lokale Schweißverfahren erzeugt. Von großem Vorteil dabei ist, dass durch den Aluminiumkolben, der als Wärmesenke wirkt, die Wärme des verhältnismäßig kleinen Schmelzbades extrem schnell abgeführt werden kann, wodurch sich deutlich feinere intermetallische Phasen ausbilden. In der Praxis hat sich dabei jedoch gezeigt, dass sich zwar insgesamt eine Feinung der intermetallischen Phasen einstellt, die aber von zwei nachteiligen Effekten überlagert wird. Zum einen werden vereinzelt auftretende, großflächige und harte intermetallische Phasen erzeugt, die aufgrund ihrer Ausdehnung als sehr nachteilig anzusehen sind. Zum anderen bilden sich vermehrt sehr große spießige intermetallische Phasen aus, die deshalb in keiner Weise wünschenswert sind. Die Faktoren, die zur Bildung der Gefügestrukturen führen, hängen unter anderem vom Zusatzwerkstoff, dessen Konzentration und Verteilung im Schmelzbad, dem Grundwerkstoff, der Höhe des Energieeintrags, dem verwendeten Schweißverfahren, etc. ab.

Die vorliegende Erfindung beschäftigt sich daher mit dem Problem, die aus dem Stand der Technik bekannten Nachteile zu überwinden und insbesondere grobnadelige, spießige oder großflächige intermetallische Phasen stark zu minimieren oder gänzlich zu vermeiden und somit eine höhere Beständigkeit der behandelten Bereiche gegenüber thermischer Ermüdung zu erzielen.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, zur Herstellung eines bekannten Aluminiumkolbens für einen Verbrennungsmotor, der zumindest im Bereich eines Muldenrandes und/oder eines Muldengrunds zum Einbringen zumindest eines Zusatzelementes in einem Grundwerkstoff des Aluminiumkolbens und zur Erzeugung intermetallischer Phasen einer Schweißbehandlung unterzogen wird, eine bestimmte Auswahl der Zusatzelemente bzw. Zusatzwerkstoffe zu treffen und vorzugsweise zum Einbringen derselben ein Schweißverfahren mit einem vordefinierten Streckenenergie/Einbrandflächen-Verhältnis E/A zu verwenden.

Erfindungsgemäß wird dabei mittels dem Schweißverfahren zumindest eines der folgenden Zusatzelemente in der angegebenen Konzentration eingebracht, nämlich 1 - 7 Gew.-& Ni, 1 - 15 Gew.-% Cu und/oder 0,5 - 5 Gew.-% Fe und es werden mittels des Schweißverfahrens intermetallische Phasen mit einer maximalen Längserstreckung von L < 50 µm erzeugt.

Zusätzlich kann bei dem erfindungsgemäßen Verfahren eines der folgenden Schweißverfahren verwendet werden, Lichtbogenschweißen wie Wolfram-Inertgasschweißen (WIG) mit E/A = 7-17 J/mm³ oder Plasmaschweißen (WP) mit E/A = 6-16 J/mm³, Laserstrahlschweißen mit E/A = 80-90 J/mm³ oder Elektronenstrahlschweißen mit E/A = 5-15 J/mm³. Wirkungsgradverluste bspw. durch Wärmestrahlung, Reflexion, etc. der genannten Schweißverfahren werden nicht berücksichtigt. Insbesondere durch die Kombination der genannten Schweißverfahren mit dem jeweils zugehörigen Streckenenergie/Einbrandflächen-Verhältnis E/A und den genannten Zusatzelementen und der jeweils zugehörigen Konzentration lässt sich eine Gefügestruktur einstellen, bei der die jeweiligen intermetallischen Phasen eine maximale Längserstreckung von L < 50 µm aufweisen und dadurch sehr fein ausgebildet sind.

Zusätzlich kann bei dem erfindungsgemäßen Verfahren eines der folgenden Schweißverfahren verwendet werden, Lichtbogenschweißen wie Wolfram-Inertgasschweißen (WIG) mit E = 150-450 J/mm oder Plasmaschweißen (WP) mit E = 250-700 J/mm, Laserstrahlschweißen mit E = 100-400 J/mm oder Elektronenstrahlschweißen mit E = 500-900 J/mm, wobei das Bauteil zuvor vorzugsweise auf eine Temperatur zwischen 100-300°C vorzuwärmen ist. Insbesondere durch die Kombination der genannten Schweißverfahren mit der genannten Streckenenergie, der Vorwärmung und den genannten Zusatzelementen und der jeweils zugehörigen Konzentration lässt sich eine Gefügestruktur einstellen, bei der die jeweiligen intermetallischen Phasen eine maximale Längserstreckung von L < 50 µm aufweisen und dadurch sehr fein ausgebildet sind.

Generell war die Vermeidung der aus dem Stand der Technik bekannten, negativen Effekte an zahlreiche Prozessparameter gekoppelt, die in unterschiedlicher Stärke miteinander in Wechselwirkung stehen. Umso überraschender war es, dass trotz der genannten komplexen Zusammenhänge ein Prozessfenster ermittelt werden konnte, welches es ermöglicht, ein Gefüge mit feinverteilten intermetallischen Phasen zu erzeugen, das zudem keine grobnadeligen, spießigen oder großflächigen intermetallischen Phasen enthält. Durch das Fehlen solcher grober intermetallischer Phasen wird bei angehobener Grundfestigkeit die Zähigkeit zudem nicht sonderlich negativ beeinflusst. Bei Temperaturbelastung helfen die fein verteilten innermetallischen Phasen, die sich einformenden Primärsiliziumpartikel zu stützen und stabilisieren somit das Siliziumskelett.

Bei einer vorteilhaften Weiterbildung betragen die Konzentrationen der mittels dem erfindungsgemäßen Schweißverfahren zugesetzten Zusatzelemente für Ni 2 - 7 Gew.-%, für Cu 3 - 15 Gew.-% und für Fe 1 - 5 Gew.-% oder 0,5-5 Gew.-%. Dies ist eine nochmalige Einschränkung der im vorherigen Absatz beschriebenen Konzentrationen der einzelnen Zusatzelemente, wodurch eine nochmalige Erhöhung der Festigkeit erzielt werden kann. Es ist dabei selbstverständlich klar, dass die genannten Elemente Nickel, Kupfer und Eisen nicht nur in Kombination, sondern auch einzeln in der jeweiligen Konzentration zugesetzt werden können.

Bei einer vorteilhaften Weiterbildung des erfindungsgemäßen Verfahrens wird für den Aluminiumkolben ein Grundwerkstoff mit folgender Zusammensetzung verwendet: Al 60-90 Gew.-%, Si 8-20 Gew.-%, Cu 2-6 Gew.-%, Ni 1-4 Gew.-% und Mg 0,2-2 Gew.-%. Besonders bevorzugt werden dabei die Elemente wie folgt begrenzt: Al 75-85 Gew.-%, Si 10-13 Gew.-%, Cu 3,5-5 Gew.-%, Ni 1,5-2,5 Gew.-% und Mg 0,5-1,5 Gew.-%. Daneben können in dem Grundwerkstoff selbstverständlich noch geringe Anteile von Eisen, Mangan, Titan, Zirkonium, Calcium, Strontium, Natrium, Phosphor oder Vanadium, insbesondere in der Art von Spurenelementen, aber auch in gezielter Form zugegeben, enthalten sein. Eine derartige Aluminiumlegierung ist insbesondere besonders widerstandsfähig gegen die hohen thermischen und mechanischen Kräfte, die beim Betrieb von Verbrennungsmotoren, insbesondere bei Dieselmotoren, auftreten.

Weitere wichtige Merkmale und Vorteile der Erfindung ergeben sich aus den Unteransprüchen, aus der Zeichnung und aus der zugehörigen Figurenbeschreibung anhand der Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind ohne den Rahmen der vorliegenden Erfindung zu verlassen.

Ein bevorzugtes Ausführungsbeispiel der Erfindung ist in der Zeichnung dargestellt und wird in der nachfolgenden Beschreibung näher erläutert.

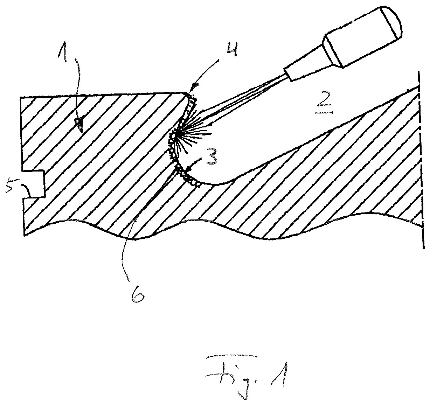

Die einzige Figur 1 zeigt ein Einbringen von Zusatzelementen in einen Muldenrand eines Kolbens mittels erfindungsgemäßem Verfahren.

Entsprechend der Figur 1, weist ein mittels eines erfindungsgemäßen Verfahrens hergestellter Aluminiumkolben 1, eine einem nicht näher dargestellten Brennraum zugewandte Mulde 2 mit einem Muldengrund 3 und einem Muldenrand 4 auf. Umlaufend sind noch in bekannter Weise Ringnuten 5 zur Aufnahme von nicht gezeigten Kolbenringen vorgesehen.

Um nun den Aluminiumkolben 1 insbesondere in thermisch und mechanisch hochbelasteten Bereichen, nämlich im Bereich des Muldengrundes 3 und/oder des Muldenrandes 4 widerstandsfähiger machen zu können, wird mittels Hilfe eines erfindungsgemäßen Verfahrens zumindest ein Zusatzelement in einen Grundwerkstoff des Aluminiumkolbens 1 zur Erzeugung intermetallischer Phasen 6 eingebracht. Mit dem erfindungsgemäßen Schweißverfahren wird zumindest eines der nachfolgenden Zusatzelemente in der angegebenen Konzentration in den Muldenrand 4 und/oder den Muldengrund 3 eingebracht, nämlich 1 - 7 Gew.-% Ni, 1 - 15 Gew.-% Cu und 1 - 5 Gew.-% Fe. Bevorzugt wird dabei die Konzentration von Ni auf 2 - 7 Gew.-% und die Konzentration von Cu auf 3 - 15 Gew.-% beschränkt. Zugleich wird als Schweißverfahren eines der nachfolgenden Schweißverfahren mit dem jeweils angegebenen Streckenenergie/Einbrandflächen-Verhältnis E/A (J/mm³) verwendet: Lichtbogenschweißen wie Wolfram-Inertgasschweißen (WIG) mit E/A = 7-17 J/mm³ oder Plasmaschweißen (WP) mit E/A = 6-16 J/mm³, Laserstrahlschweißen mit E/A = 80-90 J/mm³ oder Elektronenstrahlschweißen mit E/A = 5-15 J/mm³.

In einer anderen Ausführungsform wird mit dem erfindungsgemäßen Schweißverfahren zumindest eines der nachfolgenden Zusatzelemente in der angegebenen Konzentration in den Muldenrand 4 und/oder den Muldengrund 3 eingebracht, nämlich 1 - 7 Gew.-% Ni, 1 - 15 Gew.-% Cu und 0,5 - 5 Gew.-% Fe. Bevorzugt wird dabei die Konzentration von Ni auf 2 - 7 Gew.-% und die Konzentration von Cu auf 3 - 15 Gew.-% beschränkt. Zugleich wird als Schweißverfahren eines der nachfolgenden Schweißverfahren mit der jeweils angegebenen Streckenenergie E (J/mm)verwendet: Lichtbogenschweißen wie Wolfram-Inertgasschweißen (WIG) mit E = 150-450 J/mm oder Plasmaschweißen (WP) mit E = 250-700 J/mm³, Laserstrahlschweißen mit E = 100-400 J/mm oder Elektronenstrahlschweißen mit E = 500-900 J/mm .

Es sei dabei angefügt, dass die Zusatzelemente nicht nur in der angegebenen Kombination, sondern auch allein in der jeweilig angegebenen Konzentration in den Muldengrund 3 bzw. den Muldenrand 4 eingebracht werden können.

Mittels des erfindungsgemäßen Schweißverfahrens unter Berücksichtigung der Konzentrationen der genannten Zusatzelemente und unter Berücksichtigung der Arten der Schweißverfahren können intermetallische Phasen 6 mit einer idealerweise maximalen Längserstreckung von L < 50 µm erzeugt werden, wodurch die intermetallischen Phasen insgesamt sehr feinausgebildet sind und dadurch insbesondere grobnadelige bzw. spießige Phasen verhindert werden können. Durch das Fehlen der groben Gefügemerkmale, wie beispielsweise grobnadelige Phasen, wird bei angehobener Grundfestigkeit die Zähigkeit nicht negativ beeinflusst, wobei unter Temperaturbelastung die fein verteilten intermetallischen Phasen 6 dazu beitragen, die einformenden Primärsilizium-Partikel zu stützen und zugleich das Siliziumskelett zu stabilisieren.

Der für den Aluminiumkolben 1 verwendete Grundwerkstoff kann dabei eine Zusammensetzung mit 60-90 Gew.-% Al, 8-20 Gew.-% Si, 2-6 Gew.-% Cu, 1-4 Gew.-% Ni und 0,2-2 Gew.-% Mg aufweisen. Bevorzugt sind dabei die Bestandteile Al auf 75-85 Gew.-%, die Bestandteile an Si auf 10-13 Gew.-%, die Bestandteile an Cu auf 3,5-5 Gew.-%, die Bestandteile an Ni 1,5-2,5 Gew.-% und die Bestandteile an Mg 0,5-1,5 Gew.-% beschränkt. Den Grundwerkstoff des Aluminiumkolbens 1 können selbstverständlich noch weitere Elemente in der Art von Spurenelementen, aber auch in gezielter Form zugegeben, zugesetzt sein, wie beispielsweise Fe, Mn, Ti, Zr, Ca, Sr, Na, P und/oder V, jeweils in einer Konzentration von < 1 Gew.-%. Die Zusatzelemente Ni, Cu und/oder Fe können beispielsweise in der Form eines Pulvers oder eines Drahtes direkt dem Schmelzbad während des Schweißverfahrens zugegeben werden, wobei die Zusatzelemente selbstverständlich auch mittels thermischen Spritzen, Kaltgasspritzen, Folie, Paste, galvanischer oder chemischer Abscheidung vor dem eigentlichen Schweißverfahren auf den Grundwerkstoff des Aluminiumkolbens 1 aufgebracht werden können.

Mit dem erfindungsgemäßen Schweißverfahren und den hierbei verwendeten Schweißparametern bzw. Zusatzelementen lassen sich besonders feine intermetallische Phasen 6 erzeugen, insbesondere grobnadelige und spießige Phasen verhindern, wodurch die Widerstandsfähigkeit eines derart hergestellten Aluminiumkolbens 1 deutlich gesteigert werden kann.

## Patentansprüche

1. Verfahren zur Herstellung eines Aluminiumkolbens (1) für einen Verbrennungsmotor, der zumindest im Bereich eines Muldenrandes (4) und/oder eines Muldengrunds (3) zum Einbringen zumindest eines Zusatzelements in einen Grundwerkstoff des Aluminiumkolbens (1) und zur Erzeugung intermetallischer Phasen (6) einer Schweißbehandlung unterzogen wird,
wobei mittels dem Schweißverfahren zumindest eines der folgenden Zusatzelemente in der angegebenen Konzentration eingebracht wird, 1 - 7 Gew.-% Ni, 1 - 15 Gew.-% Cu und 0,5 - 5 Gew.-% Fe,
**dadurch gekennzeichnet, dass**
mittels des Schweißverfahrens intermetallische Phasen (6) mit einer maximalen Längserstreckung von L < 50 µm erzeugt werden.

2. Verfahren nach Anspruch 1,
**dadurch gekennzeichnet,**
**dass** als Schweißverfahren eines der folgenden mit dem jeweils angegebenen Streckenenergie/Einbrandflächen-Verhältnis E/A (J/mm³) verwendet wird, Lichtbogenschweißen wie Wolfram-Inertgasschweißen (WIG) mit E/A = 7-17 J/mm³ oder Plasmaschweißen (WP) mit E/A = 6-16 J/mm³, Laserstrahlschweißen mit E/A = 80-90 J/mm³, Elektronenstrahlschweißen mit E/A = 5-15 J/mm³.

3. Verfahren nach Anspruch 2,
**dadurch gekennzeichnet,**
**dass** als Schweißverfahren eines der folgenden mit der jeweils angegebenen Streckenenergie E (J/mm) verwendet wird, Lichtbogenschweißen wie Wolfram-Inertgasschweißen (WIG) mit E = 150-450 J/mm oder Plasmaschweißen (WP) mit E = 250-700 J/mm Laserstrahlschweißen mit E = 100-400 J/mm , Elektronenstrahlschweißen mit E = 500-900 J/mm, wobei die Bauteile zuvor auf eine Temperatur oberhalb der Raumtemperatur vorzuwärmen sind und zwar idealerweise im Bereich zwischen 100 - 300°C.

4. Verfahren nach einem der Ansprüche 1 bis 3,
**dadurch gekennzeichnet,**
**dass** mittels dem Schweißverfahren zumindest eines der folgenden Zusatzelemente in der angegebenen Konzentration eingebracht wird, 2 - 7 Gew.-% Ni, 3 - 15 Gew.-% Cu und 1 - 5 Gew.-% Fe.

5. Verfahren nach Anspruch 1 oder 3,
**dadurch gekennzeichnet,**
**dass** mittels dem Schweißverfahren zumindest eines der folgenden Zusatzelemente in der angegebenen Konzentration eingebracht wird, 2 - 7 Gew.-% Ni, 3 - 15 Gew.-% Cu und 0,5 - 1 Gew.-% Fe.

6. Verfahren nach einem der Ansprüche 1 bis 5,
**dadurch gekennzeichnet,**
**dass** für den Aluminiumkolben (1) ein Grundwerkstoff mit folgender Zusammensetzung verwendet wird, Al 60-90 Gew.-%, Si 8-20 Gew.-%, Cu 2-6 Gew.-%, Ni 1-4 Gew.-% und Mg 0,2-2 Gew.%.

7. Verfahren nach einem der Ansprüche 1 bis 5,
**dadurch gekennzeichnet,**
**dass** für den Aluminiumkolben (1) ein Grundwerkstoff mit folgender Zusammensetzung verwendet wird, Al 75-85 Gew.-%, Si 10-13 Gew.-%, Cu 3,5-5 Gew.-%, Ni 1,5-2,5 Gew.-% und Mg 0,5-1,5 Gew.-%.

8. Verfahren nach einem der Ansprüche 1 bis 7,
**dadurch gekennzeichnet,**
**dass** dem Grundwerkstoff des Aluminiumkolbens (1) zumindest eines der weiteren Elemente jeweils in einer Konzentration von < 1 Gew.-% zugesetzt wird, Fe, Mn, Ti, Zr, V, Ca, Sr, Na, P.

9. Verfahren nach einem der Ansprüche 1 bis 8,
**dadurch gekennzeichnet,**
**dass** das zumindest eine Zusatzelement in Form eines Pulvers oder eines Drahts direkt dem Schmelzbad während des Schweißens zugegeben wird.

10. Verfahren nach einem der Ansprüche 1 bis 9,
**dadurch gekennzeichnet,**
**dass** das zumindest eine Zusatzelement mittels thermischem Spritzen, Kaltgasspritzen, Folie, Paste, galvanischer Abscheidung oder chemischer Abscheidung vor dem eigentlichen Schweißverfahren auf den Grundwerkstoff aufgebracht wird.

11. Verfahren nach einem der Ansprüche 1 bis 10,
**dadurch gekennzeichnet,**
**dass** als Schweißverfahren Metall-Inertgasschweißen, Laser-Plasma-Pulver Hybridschweißen oder Laser-MIG Hybridschweißen verwendet wird.

12. Aluminiumkolben (1) für einen Verbrennungsmotor, der zumindest im Bereich eines Muldenrandes (4) und/oder eines Muldengrunds (3) einem Verfahren nach einem der Ansprüche 1 bis 11 unterzogen ist.

## Claims

1. Method for producing an aluminium piston (1) for an internal combustion engine, which is subjected to a welding treatment at least in the area of a cavity edge (4) and/or a cavity base (3) for introducing at least one additive element into a base material of the aluminium piston (1) and for generating intermetallic phases (6) of a welding treatment,
wherein by means of the welding method at least one of the following additive elements is introduced in the given concentration, 1-7 wt.-% Ni, 1-15 wt.-% Cu und 0.5-5 wt.-% Fe,
**characterised in that**
by means of the welding method intermetallic phases (6) are generated with a maximum longitudinal extension of L < 50 µm.

2. Method according to claim 1,
**characterised in that**
one of the following methods is used as the welding method with the respectively specified energy per unit length/weld penetration surface ratio E/A (J/mm³), arc welding such as tungsten inert gas welding (WIG) with E/A = 7-17 J/mm³ or plasma welding (WP) with E/A = 6-16 J/mm³, laser welding with E/A = 80-90 J/mm³, electron beam welding with E/A = 5-15 J/mm³.

3. Method according to claim 2,
**characterised in that**
one of the following methods is used as the welding method with the respectively specified energy per unit length E(J/mm), arc welding such as tungsten inert gas welding (WIG) with E = 150-450 J/mm or plasma welding (WP) with E = 250-700 J/mm, laser welding with E = 100-400 J/mm, electron beam welding with E = 500-900 J/mm, wherein the components are previously heated to a temperature above ambient temperature and ideally in a range between 100 - 300 °C.

4. Method according to any of claims 1 to 3,
**characterised in that**
by means of the welding method at least one of the following additive elements is introduced in the specified concentration, 2-7 wt.-% Ni, 3-15 wt.-% Cu and 1-5 wt.-% Fe.

5. Method according to claim 1 or 3,
**characterised in that**
by means of the welding method at least one of the following additive elements is introduced in the specified concentration, 2-7 wt.-% Ni, 3-15 wt.-% Cu and 0.5-1 wt.-% Fe.

6. Method according to any of claims 1 to 5,
**characterised in that**
for the aluminium piston (1) a base material is used with the following composition, Al 60-90 wt.-%, Si 8-20 wt.-%, Cu 2-6 wt.-%, Ni 1-4 wt.-% and Mg 0.2-2 wt.%.

7. Method according to any of claims 1 to 5,
**characterised in that**
for the aluminium piston (1) a base material is used with the following composition, Al 75-85 wt.-%, Si 10-13 wt.-%, Cu 3.5-5 wt.-%, Ni 1.5-2.5 wt.-% and Mg 0.5-1.5 wt.-%.

8. Method according to any of claims 1 to 7,
**characterised in that**
at least one of the additional elements is added to the base material of the aluminium piston (1) respectively in a concentration of < 1 wt.-%, Fe, Mn, Ti, Zr, V, Ca, Sr, Na, P.

9. Method according to any of claims 1 to 8,
**characterised in that**
the at least one additive element is added in the form of a powder or a wire directly to the melt bath during the welding.

10. Method according to any of claims 1 to 9,
**characterised in that**
the at least one additive element is applied onto the base material by means thermal spraying, cold gas spraying, film, paste, galvanic deposition or chemical deposition before the actual welding method.

11. Method according to any of claims 1 to 10,
**characterised in that**
metal inert gas welding, laser plasma powder hybrid welding or laser MIG hybrid welding is used as the welding method.

12. Aluminium piston (1) for an internal combustion engine, which is subjected to a method according to any of claims 1 to 11 at least in the area of a cavity edge (4) and/or a cavity base (3).

## Revendications

1. Procédé de fabrication d'un piston en alliage d'aluminium (1) pour un moteur à combustion interne, lequel piston est soumis à un traitement de soudage au moins dans la zone d'un bord de cavité (4) et/ou d'un fond de cavité (3) en vue de l'introduction d'au moins un métal d'alliage ajouté dans un matériau de base du piston en alliage d'aluminium (1) et en vue de la production de phases intermétalliques (6),
dans lequel, au moyen du procédé de soudage, au moins un des métaux d'alliage ajoutés suivants est introduit avec la concentration indiquée, 1-7 % en poids de Ni, 1-15 % en poids de Cu et 0,5-5 % en poids de Fe,
**caractérisé en ce que**
au moyen du procédé de soudage, des phases intermétalliques (6) avec une extension longitudinale maximale L < 50 µm sont produites.

2. Procédé selon la revendication 1,
**caractérisé en ce que**
l'un des procédés suivants est utilisé comme procédé de soudage avec le rapport énergie de soudage / surface de pénétration E/A (J/mm³) respectivement indiqué, soudage à l'arc tel que soudage au tungstène en atmosphère inerte (WIG) avec E/A = 7-17 J/mm³ ou soudage au plasma (WP) avec E/A = 6-16 J/mm³, soudage au laser avec E/A = 80-90 J/mm³, soudage par bombardement électronique avec E/A = 5-15 J/mm³.

3. Procédé selon la revendication 2,
**caractérisé en ce que**
l'un des procédés suivants est utilisé comme procédé de soudage avec l'énergie de soudage E (J/mm) respectivement indiquée, soudage à l'arc tel que soudage au tungstène en atmosphère inerte (WIG) avec E = 150-450 J/mm ou soudage au plasma (WP) avec E = 250-700 J/mm, soudage au laser avec E = 100-400 J/mm, soudage par bombardement électronique avec E = 500-900 J/mm, les pièces devant être préalablement préchauffées à une température supérieure à la température ambiante et ce idéalement dans la plage entre 100-300 °C.

4. Procédé selon l'une quelconque des revendications 1 à 3,
**caractérisé en ce que**
au moyen du procédé de soudage, au moins l'un des métaux d'alliage ajoutés suivants est introduit avec la concentration indiquée, 2-7 % en poids de Ni, 3-15 % en poids de Cu et 1-5 % en poids de Fe.

5. Procédé selon la revendication 1 ou 3,
**caractérisé en ce que**
au moyen du procédé de soudage, au moins l'un des métaux d'alliage ajoutés suivants est introduit avec la concentration indiquée, 2-7 % en poids de Ni, 3-15 % en poids de Cu et 0,5-1 % en poids de Fe.

6. Procédé selon l'une quelconque des revendications 1 à 5,
**caractérisé en ce que**
pour le piston en alliage d'aluminium (1), un matériau de base est utilisé avec la composition suivante, Al 60-90 % en poids, Si 8-20 % en poids, Cu 2-6 % en poids, Ni 1-4 % en poids et Mg 0,2-2 % en poids.

7. Procédé selon l'une quelconque des revendications 1 à 5,
**caractérisé en ce que**
pour le piston en alliage d'aluminium (1), un matériau de base est utilisé avec la composition suivante, Al 75-85 % en poids, Si 10-13 % en poids, Cu 3,5-5 % en poids, Ni 1,5-2,5 % en poids et Mg 0,5-1,5 % en poids.

8. Procédé selon l'une quelconque des revendications 1 à 7,
**caractérisé en ce**
**qu'**on ajoute au matériau de base du piston en alliage d'aluminium (1) au moins l'un des autres éléments, à chaque fois avec une concentration < 1 % en poids, Fe, Mn, Ti, Zr, V, Ca, Sr, Na, P.

9. Procédé selon l'une quelconque des revendications 1 à 8,
**caractérisé en ce que**
l'au moins un métal d'alliage ajouté est ajouté sous la forme d'une poudre ou d'un fil directement au bain de fusion pendant le soudage.

10. Procédé selon l'une quelconque des revendications 1 à 9,
**caractérisé en ce que**
l'au moins un métal d'alliage ajouté est appliqué sur le matériau de base avant le procédé de soudage proprement dit au moyen d'une projection thermique, d'une projection par gaz froid, d'un film, d'une pâte, d'un dépôt par électrolyse ou d'un dépôt par voie chimique.

11. Procédé selon l'une quelconque des revendications 1 à 10,
**caractérisé en ce que**
l'on utilise comme procédé de soudage le soudage au métal en atmosphère inerte, le soudage hybride laser et plasma sous poudre ou le soudage hybride laser et MIG.

12. Piston en alliage d'aluminium (1) pour un moteur à combustion interne, lequel piston est soumis à un procédé selon l'une quelconque des revendications 1 à 11 au moins dans la zone d'un bord de cavité (4) et/ou d'un fond de cavité (3).
